# EUROPEAN PATENT SPECIFICATION

(11) **EP 2 934 180 B1**
(45) Date of publication and mention of the grant of the patent: **19.04.2017**
(21) Application number: 12829108.5
(22) Date of filing: 21.12.2012
(51) Int. Cl.: A23C 9/12, A23L 7/10, A23L 33/22

(54) **DAIRY FERMENTED PRODUCT COMPRISING WHEAT BRAN**
FERMENTIERTES MILCHPRODUKT MIT WEIZENKLEIE
PRODUIT LAITIER FERMENTÉ COMPRENANT DU SON DE BLÉ

(43) Date of publication of application: 28.10.2015
(73) Proprietor: Compagnie Gervais Danone, 75009 Paris (FR)
(72) Inventor: VALENTINI, Céline, F-92320 Chatillon (FR); NOBLE, Olivier, F-91400 Orsay (FR)
(74) Representative: Boittiaux, Vincent
(86) International application number: PCT/IB2012/002871
(87) International publication number: WO 2014/096883

(56) References cited:
- DE-A1- 3 731 304
- FR-A2- 2 477 844
- GB-A- 2 026 838
- US-A1- 2011 244 073
- HASHIM I B ET AL: "Quality characteristics and consumer acceptance of yogurt fortified with date fiber", JOURNAL OF DAIRY SCIENCE, AMERICAN DAIRY SCIENCE ASSOCIATION, US, vol. 92, no. 11, 1 November 2009 (2009-11-01), pages 5403-5407, XP026954783, ISSN: 0022-0302 [retrieved on 2009-11-01]

## Description

The invention relates to a dairy fermented product comprising a significant amount of wheat bran and to a process of making such a product.

Wheat bran is an ingredient that can be used in food products as a source of wheat bran fibers that are recognized as providing health-related benefits. Dairy fermented products are appreciated by consumers as products that can provide health-related benefits. There is a need for dairy fermented products comprising a significant amount of wheat bran, typically for providing a significant amount of wheat bran fiber; while having good properties such as organoleptic properties, visual aspect and stability.

Document WO 2010/066012 describes a yogurt composition comprising 8.4% of wheat bran and 3.2% of arbinoxylan -oligosaccharides (AXOS). Such products however provide bad organoleptic properties such as astringency, bitterness and strong cereal taste. Meanwhile such products are expected to provide much whey, which is not appreciated by consumers. There is a need for improved products comprising wheat bran.

Document RU 2006113061 describes milk-based compositions comprising 0.3-0.7% of wheat bran, wherein the wheat bran has a fiber content of 45% to 83%. Such compositions provide very low amounts of wheat bran fibers and are not efficient to provide the benefit associated to such fibers. There is a need for more concentrated compositions.

Documents WO 2006/134159 and WO 2006/134157 describe fermented dairy products comprising wheat bran with a particle size of 0.5-1.5 mm, introduced in an amount of 0.57% by weight (3% in an intermediate preparation, used as 19% of the final product). Such compositions provide very low amounts of wheat bran fibers and are not efficient to provide the benefit associated to such fibers. There is a need for more concentrated compositions.

Document *"*Presence of a beta -galactosidase system in wheat bran, and production of yoghurt with added bran", Costamagna, L; Rossi, J, Annali della Facolta di Agraria, Universita degli Studi di Perugia 32. 1 (1977): 169-183 describes yogurt compositions comprising 15% of wheat bran, introduced before fermentation. The particle size of the wheat bran is not disclosed. Such products are expected to provide much whey, which is not appreciated by consumers. There is a need for different compositions.

Document *"*Effect of the bran wheat on the rheological behavior of yogurt buffalo milk", Andrade, R D; Arteaga, M R; Simanca, M M., Informacion Tecnologica 21. 5 (2010): 117-124*.*, describes buffalo yogurts comprising up to 5% of wheat bran having a particle size of about 50 µm. Such yogurts are said to have a pseudoplastic rheology. Particles of such a size are believed to provide bitterness, and are expected to provide much whey, which is not appreciated by consumers. There is a need for different compositions. Document US 2010/0080866 describes solid baked compositions comprising wheat bran. There is a need for products having different forms.

Document US 2004-0258776 describes aleuron extracts from wheat bran and uses in food compositions such as yogurts. Amounts in products are not disclosed. The extraction process is complex; there is a need for less complex compositions and processes comprising wheat bran.

Document US 2003/0175384 describes a method of extracting aleuron from wheat bran having a size of 400-800 µm, and uses in food compositions such as yogurts. Amounts in products are not disclosed. The extraction process is complex; there is a need for less complex compositions and processes comprising wheat bran.

Document WO 2006/002495 describes arabinoxylans extracted from wheat bran with a degree of polymerization between 5 and 50 used in dairy products such as yogurts in amounts of from 0.25 to 5 g per 125 g. The extraction process is complex, there is a need for less complex compositions and processes comprising wheat bran.

Document WO 03/055331 describes the use of wheat bran in food compositions, for example in dairy products. However there is no information about precise amounts and sizes that would be appropriate in dairy products. There is a need for improved compositions.

Document WO 2005/011403 describes fermenting an aqueous composition comprising wheat bran and admixing it in a dairy product. The fermentation can be complex and the final amount in the dairy product is quite low (up to 0.8% in example 10). There is a need for different products or processes.

Some dairy products comprising wheat bran, and thus wheat bran fiber, have been marketed. However these products comprise low amounts of wheat bran, and thus low amounts of wheat bran fibers. There is a need for products comprising high amounts of wheat bran fibers, which still present good organoleptic properties, visual aspect and/or stability.

The invention addresses at least one of the above problems and/or needs with a dairy fermented product in a non-solid form comprising wheat bran dispersed therein, wherein:
- the product comprises at least 2.6 g of wheat bran, preferably at least 3.7 g, per 100 g of product, and
- the wheat bran has a particle size with a volume average diameter D_{M} of from 200 µm to 400 µm, preferably from 250 to 350 µm.

The invention also concerns a process of making a dairy fermented product in a non-solid form, comprising the step of dispersing wheat bran powder in a dairy fermented white mass or ingredients thereof, wherein:
- at least 2.6 g of wheat bran powder, preferably at least 3.7 g, per 100 g of product are dispersed, and
- the wheat bran powder has a particle size with a volume average diameter D_{M} of from 200 µm to 400 µm, preferably from 250 to 350 µm.
Also disclosed is an intermediate preparation useful for preparing the fermented dairy product. Also disclosed is the use of the products as food products. The invention also concerns the use of the products by oral administration.

It has been found that the specific particle size provides improved products with a low amount of whey in the fermented dairy products, which whey is not appreciated by consumers. It has also been found that the specific particle size reduces bitterness, while avoiding the perception of particles in mouth, which is not appreciated by consumers.

Meanwhile the products, processes and/or intermediate preparations have a good processability with for example appropriate stabilities and/or viscosities. Also disclosed is the use of the products for reducing and/or preventing gastro-intestinal discomfort, for example the use of the products for contributing to an acceleration of intestinal transit. The disclosure also concerns a method of reducing and/or preventing gastro-intestinal discomfort, by oral administration of the products. For example the disclosure concerns a method for accelerating intestinal transit by oral administration of the products. The disclosure also concerns the products for use for reducing and/or preventing gastro-intestinal discomfort. For example the disclosure concerns the products for use for an acceleration of intestinal transit.

### Definitions

In the present application, unless provided otherwise, amounts of compounds or compositions are amounts by weight.

In the present application particle sizes and particle sizes distribution refer to sizes and distributions evaluated by light scattering technologies, preferably with a Malvern Mastersizer 2000 laser particle size analyzer.

Unless provided otherwise, a particle size refers to a volume-average diameter D_{M}, wherein the diameter is the diameter of a sphere that would have the same volume than the particle or particles sample.

In the present application, a D₁₀ size represents the diameter (of a sphere having the same volume) at which 10% by volume of the particles have a lower diameter and 90% by volume the particles have a higher diameter.

In the present application, a D₅₀ size represents the diameter (of a sphere having the same volume) at which 50% by volume of the particles have a lower diameter and 50% by volume the particles have a higher diameter.

In the present application, a D₉₀ size represents the diameter (of a sphere having the same volume) at which 90% by volume of the particles have a lower diameter and 10% by volume the particles have a higher diameter.

### Dairy fermented product

The product of the invention is a non-solid dairy fermented product comprising wheat bran dispersed therein. The product can be considered as a non-solid dairy fermented matrix with wheat bran dispersed therein. Herein the matrix can be understood as the product without the wheat bran. The product without the wheat bran can also be referred to as a white mass. Hereafter, for sake of simplicity, it can be referred to the dairy fermented product or dairy fermented composition or dairy fermented for the matrix for the same object.

The product is a non-solid product. Examples of non-solid products include pastes and liquids. As non-solid it is referred to pasty or fluid products that can by penetrated by a spoon. The products are typically spoonable products. Examples of products that are considered as solids include powders, baked products and dry cereals.

Dairy fermented products are known by the one skilled in the art. Compositions suitable as dairy fermented products can be referred to as white masses. The dairy fermented composition is typically a fermented milk product. Such products are made from a milk-based composition and have undergone a fermentation step. The fermentation is typically done by microorganisms comprising lactic acid bacteria and optionally yeasts, and leads to the production of fermentation products, for example lactic acid, and/or to the multiplication of the microorganisms. The designation "fermented milk" can depend on local legislation, but is typically given to a dairy product prepared from skimmed or full fat milk, or concentrated or powdered milk, having undergone a heat treatment at least equivalent to a pasteurization treatment, and inoculated with lactic acid producing microorganisms such as Lactobacilli (Lactobacillus acidophilus, Lb. casei, Lb. plantarum, Lb. reuteri, Lb. johnsonii), certain Streptococci (Streptococcus thermophilus), Bifidobacteria (Bifidobacterium bifidum, B. longum, B. breve, B. animalis) and/or Lactococci (Lactococcus lactis). The dairy fermented composition is preferably a yogurt. It is mentioned that the milk or the milk ingredient(s) is preferably animal milk or milk ingredient(s), preferably cow milk or milk ingredient(s).

The dairy fermented composition can be a set product, wherein fermentation occurs in the packaging or a stirred or drink product, wherein fermentation occurs in a tank, and is then stirred to lower the viscosity prior to pack.

Further to wheat bran, the dairy fermented composition can comprise some organoleptic modifiers, such as colorants, sugar sweeteners, further sweeteners, flavors, fruit juice or fruit preparation, provided that these ingredients are suitable for human or animal consumption. Such ingredients and preparations are known by the one skilled in the art. They are typically selected to meet the consumers' tastes, with different varieties of products. The composition can comprise further ingredients suitable for human or animal consumption, for example ingredients and additives that are usually used in yogurts or desserts. These include for example fibers different from wheat bran fiber, minerals, vitamins, fat or fat substitutes, for example vegetal fat, preservatives, etc.

Some details about ingredients of the products and incorporation in the product are provided below.

### Wheat bran and wheat bran fiber

The product comprises wheat bran. Wheat bran is a common ingredient, known by the one skilled in the art. Wheat bran comprises wheat bran fiber and other components. These are known as well. Wheat bran fiber is an insoluble fiber present in wheat bran. Wheat bran can typically comprise from 30% to 50% by weight of wheat bran fiber, preferably from 35% to 45%. The very composition of wheat bran can vary depending on the plant variety, the climate, and the refining. Wheat bran fiber typically comprises lignin, arabinoxylans, cellulose, and beta-glucans. It is mentioned that wheat bran is typically different from aleuron extracts.

The wheat bran is typically a powder dispersed as particles in the product. The wheat bran for the invention has a particle size with a volume average diameter D_{M} of from 200 µm to 400 µm, preferably from 250 to 350 µm. Wheat bran of the desired particle size can be obtained by any appropriate process and means, for example by mechanical size reduction, by example by milling and/or sieving or sifting.

The wheat bran has preferably a particle size distribution as follows:
- Volume average diameter D_{M} of from 200 µm to 400 µm, preferably from 250 to 350 µm,
- D₁₀ of higher than 100 µm, preferably higher than 200 µm,
- D₅₀ of from 200 µm to 400 µm, preferably of from 250 µm to 350 µm, and
- D₉₀ of lower than 600 µm, preferably lower than 400 µm.

High concentrations of wheat bran allow an efficient supplementation. For example high concentrations allow quite small size servings and/or allow a reduced number of servings to reach a desired intake. The amount of wheat bran can vary depending on other features of the dairy product, for example depending on energy density of the product. The amount can vary as well depending on the amount of wheat bran fiber in the wheat bran used. The one skilled in the art knows how to adjust the amounts and features of the dairy fermented composition.

Wheat bran is present and/or provided in the product in an amount of at least 2.6 g, preferably at least 3.7 g, per 100 g of product. In some embodiments the amount is of at least 6 g, and even of at least 7 g per 100 g. The amount is typically lower or equal to 10 g per 100 g.

Wheat bran fiber is preferably present and/or provided in the product in an amount of at least 1.17 g, preferably at least 1.66 g, of wheat bran fiber, per 100 g of product. In some embodiments the amount is of at least 2.7 g, and even of at least 3.15 g per 100 g. The amount is typically lower or equal to 4.5 g per 100 g.

Wheat bran fiber is preferably present and/or provided in the product in an amount of
at least 1.17 g per 100 kcal of product, preferably at least 1.66 g per 100 kcal. In some embodiments the amount is of at least 2.7 g, and even of at least 3.15 g per 100 g. The amount is typically lower or equal to 4.50 g per 100 kcal.

### Processes

The invention also concerns a process useful for making the product. One can make the product by any appropriate process allowing a dispersion of the wheat bran in the dairy fermented product.

A specifically useful process is a process of making a dairy fermented product in a non-solid form, comprising the step of dispersing wheat bran powder in a dairy fermented white mass or ingredients thereof, wherein:
- at least 2.6 g of wheat bran powder, preferably at least 3.7 g, per 100 g of product are dispersed, and
- the wheat bran powder has a particle size with a volume average diameter D_{M} of from 200 µm to 400 µm, preferably from 250 to 350 µm.

The process can comprise the steps of:
a) providing a dairy fermented white mass,
b) adding the wheat bran powder, preferably in an intermediate preparation comprising water, optionally taste modifiers, and the wheat bran dispersed therein.

In a preferred embodiment the wheat bran is added via an intermediate preparation typically comprising water, optionally taste modifiers, and the wheat bran dispersed therein. Such intermediate preparations are often referred to as fruit preparations, and are known by the one skilled in the art.

The intermediate preparation is preferably added in an amount by weight of from 5 parts to 50 parts, preferably from 10 parts to 30 parts, for 100 parts of product.

It is mentioned that the features, such as sizes, amounts and/or concentrations, given above about the wheat bran in the dairy fermented products apply similarly to the process.

The white mass of step a) can be prepared by any appropriate process. For example the white mass can be prepared by a comprising the steps of:
a1) providing a milk-based composition,
a2) inoculating microorganisms comprising lactic acid bacteria in the milk-based composition,
a3) allowing a lactic fermentation to obtain a white mass.

Milk-based compositions useful in the process are known by the one skilled in the art of fermented dairy products. Herein a milk-based composition encompasses milk or milk fractions, and compositions obtained by mixing several previously separated milk fractions. Some water or some additives can be added to said milk, milk fractions and mixtures. Herein milk typically refers to animal milk, for example cow milk. Some alternative animal milks can be used, such as sheep milk or goat milk.

The milk-based composition can typically comprise ingredients selected from the group consisting of milk, half skimmed milk, skimmed milk, milk powder, skimmed milk powder, milk proteins, cream, and mixtures thereof. Some water or additives can be mixed therewith.

Step a1) can comprise sub-steps further to mixing such as heat-treatments, for example pasteurization or sterilization, and/or homogenization. Such steps are known be the one skilled in the art.

Step a1) can be performed using conventional equipments such as mixing equipments, heat exchangers, and homogenizers.

In a particular embodiment, step a1) comprises the following steps:
- step a1a) mixing ingredients to provide the milk-based composition comprising erythritol,
- step a1b) pasteurizing at a temperature of at least 90°C,
- step a1c) homogenizing and cooling to a temperature of less than 50°C.

Step a1) can comprise a homogenization step. This is preferably carried out at step a1c). Such operations are well known by the one skilled in the art and can be performed with conventional equipments. The homogenization can be performed at a pressure of at least 25 bars. In a particular embodiment, the homogenization phase is performed at a pressure of at least 100 bars. It is mentioned that the homogenization can be performed in two steps: one at a pressure of 100-200 bars, one at a pressure of 25-50 bars.

Step a1) can comprise a heat treatment, such as pasteurization, Ultra High Temperature treatment, or High Temperature treatment. This is preferably carried out at step a1b). Such treatments are known by the one skilled in the art, and can be performed with conventional equipments. The heat treatment is typically operated at at least 90°C. Depending on the temperature the treatment time can last typically from 1s to 20 minutes.

Step a1) can comprise a step of placing the mixture to a fermentation temperature, typically comprised between 30 and 50°C, preferably of 35°C to 45°C. This is typically done by cooling after a heat treatment. This can be done for example at step a1c).

### Step a2)

Step a2) involves inoculating microorganisms comprising lactic acid bacteria in the milk-based composition.

Such an operation is known by the one skilled in the art. Appropriate microorganisms and lactic acid bacteria are known by the one skilled in the art. It is mentioned the microorganisms can be free of microorganisms appropriate for an alcoholic fermentation, typically used in kefir processes. The microorganisms are typically free of sake yeast.

It is mentioned that lactic acid bacteria are often referred to as ferments or cultures or starters.

Examples of lactic acid bacteria that can be used include:
- Lactobacilli, for example Lactobacillus acidophilus, Lactobacillus casei, Lactobacillus plantarum, Lactobacillus reuteri, Lactobacillus johnsonii, Lactobacillus helveticus, Lactobacillus brevis, Lactobacillus rhamnosus,
- Streptococci, for example Streptococcus thermophilus,
- Bifidobacteria, for example Bifidobacterium bifidum, Bifidobacterium longum, Bifidobacterium breve, Bifidobacterium animalis,
- Lactococci, for example Lactococcus lactis,
- mixtures or association thereof.

The lactic acid bacteria preferably comprise, preferably consist of, Lactobacillus delbrueckii subsp. bulgaricus and Streptococcus salivarius subsp. thermophilus bacteria. The lactic acid bacteria used in the invention typically comprise an association of Streptococcus thermophilus and Lactobacillus delbrueckii subsp. bulgaricus. This association is known and often referred to as a yogurt symbiosis.

In a particular embodiment the lactic acid bacteria comprise probiotic bacteria. Probiotic bacteria are known by the one skilled in the art. Examples of probiotic bacteria include some Bifidobacteria and Lactobacilli, such as Bifidobacterium brevis, Bifidobacterium animalis, Bifidobacterium animalis lactis, Bifidobacterium infantis, Bifidobacterium longum, Lactobacillus helveticus, Lactobacillus casei, Lactobacillus casei paracasei, Lactobacillus acidophilus, Lactobacillus rhamnosus, Lactobacillus plantarum, Lactobacillus reuteri, Lactobacillus delbrueckii subsp bulgaricus, Lactobacillus delbrueckii subsp lactis, Lactobacillus delbrueckii subsp delbrueckii, Lactobacillus brevis and Lactobacillus fermentum.

### Step a3)

Step a3) involves allowing a lactic fermentation, preferably at a temperature of higher than 30°C. This step is also referred to as a fermentation step. Step a3) leads to a composition referred to as a sweetened white mass.

Fermentation operations are known by the one skilled in the art. Fermentation can be typically performed at a temperature between 30°C and 50°C, preferably from 35°C to 45°C. Fermentation can be stopped by cooling and/or breaking the mixture when a breaking pH is reached. The fermentation time is the time between the inoculation and the breaking and/or cooling. The fermentation time can depend on the lactic acid bacteria, on the amount thereof, and on the temperature, and can for example last from 3 hours to 30 hours, for example from 12 to 22 hours.

During fermentation, the pH of the mixture decreases with production of lactic acid by the bacteria. The pH at the end of the fermentation can be typically of 5 or less than 5, preferably of 3.5 to 4.6. In a preferred embodiment the lactic acid fermentation carried out to a pH of from 3.5 to 5 preferably from 3.9 to 4.6.

After fermentation, step a3) can comprise a further step of stirring to obtain a composition having a desired viscosity. Such a step can be performed for example with a smoothing valve, for example at a pressure of at least 1.5 bars. This step provides some shear to composition that typically allow a viscosity drop. Such operations are known by the one skilled in the art, and can be operated with conventional appropriate equipments. This step is typically performed at cold temperature, for example at a temperature of form 1°C to 25°C. It is mentioned that this stirring step is not performed in the case of set products, wherein fermentation is performed in packaging.

### Intermediate preparation

The disclosure also concerns intermediate preparations comprising the wheat bran with the particles sizes as described above, and the use thereof in processes of making fermented dairy products.

In a preferred embodiment the intermediate preparation comprises at least 10% by weight, preferably at least 15% of wheat bran.

Intermediate preparations such as fruit preparation can comprise, beyond wheat bran, water, fruits or fruit extracts and optionally further organoleptic modifiers, such as sugar and/or sweeteners. They also typically comprise a stabilizing system, having at least one stabilizer. The stabilizing system can comprise at least two stabilizers. Such stabilizers are known by the one skilled in the art. They typically help in avoiding phase separation of solids, for examples of fruits or fruits extracts and/or in avoiding syneresis. They typically provide some viscosity to the composition, for example a viscosity (Bostwick viscosity at 20°C) of from 1 to 20 cm/min, preferably of from 4 to 12 cm/min.

The stabilizing system or the stabilizer can for example be a starch, a pectin, a guar, a xanthan, a carrageenan, a locust bean gum, or a mixture thereof. The amount of stabilizing system is typically of from 0.5 to 5% by weight.

The sweetening composition can typically comprise organoleptic modifiers. Such ingredients are known by the one skilled in the art.

The organoleptic modifiers can be for example flavors (or "aroma"), sugars, sweetening agents, coloring agents, fruits, fruit extracts.

Examples of sweetening agents are ingredients referred to as High Intensity Sweeteners, such as sucralose, acesulfamK, aspartam, saccharine, rebaudioside A or other steviosides or stevia extracts.

Examples of flavors include for example strawberry flavor, apricot flavor, vanilla flavor, peach flavor, cream flavor, sweet boosters, flavor modifiers, flavor improvers, sweet modifiers, sweetness enhancers, masking flavors, and mixtures thereof. Such flavors are known be the one skilled in the art.

Useful fruits or fruit extracts are known by the one skilled in the art. Fruits and fruits extracts are herein considered as being sweetening agents. Examples of fruits or fruit extract include for example:
- frozen fruit cubes, for example 10 mm fruit cubes, for example Individual Quick Frozen fruit cubes, for example strawberry, peach, apricot, mango, apple or pear fruit cubes or mixtures thereof,
- Aseptic fruit cubes, for example 10 mm fruit cubes, for example strawberry, peach, apricot, mango, apple or pear fruit cubes or mixtures thereof,
- fruit purees, for example fruit purees concentrated from 2 to 5 times, preferably 3 times, for example aseptic fruit purees, for example strawberry, peach, apricot, mango, raspberry, blueberry or apple fruit purees or mixtures thereof,
- single aseptic fruit purees, for example strawberry, raspberry, peach, apricot, blueberry or apple single aseptic fruit purees or mixture thereof,
- frozen whole fruits, for example Individual Quick Frozen whole fruits, for example blueberry, raspberry or blackberry frozen whole fruits, or mixtures thereof,
- mixtures thereof.

Other examples of organoleptic modifiers include cacao, chocolate, coffee, nuts such as almond, walnut or chestnut, or extracts thereof or flavors thereof.

The organoleptic modifiers and the amounts thereof are typically such that the composition has a brix degree of from 1 to 65 brix.

The intermediate composition can comprise water. It is mentioned that a part of the water can come from ingredients used to prepare the composition, for example from fruits or fruit extracts. The amount of water in the composition is preferably of from 10 to 99%, preferably of from 10 to 87%.

The intermediate composition can comprise pH modification agents such as citric acid.

The intermediate composition can comprise further ingredients. Examples of such further ingredients include some nutrients and/or vitamins. The composition can for example comprise vitamin D, vitamin B and/or vitamin E. The amounts in the composition of such further ingredients can be adjusted for meeting desired amount in the fermented dairy product.

### Packaging and servings

The product of the invention is typically contained in a sealed container as a packaging. The process typically involves a step of conditioning the product in a container. The container is then typically sealed, for example with a cap or a lid. The container is preferably a 100 g to 200 g container, for example 100 g to 135g or 135 g to 150 g or 150 g to 200 g, for example 100 g or 125 g or 150 g or 175 g. The amount of product in the container is typically a serving amount of from 100 g to 200 g, for example 100 g to 135g or 135 g to 150 g or 150 g to 200 g, for example 100 g or 125 g or 150 g or 175 g. The container is preferably a cup.

The product can be stored, transported and/or distributed at a chilled temperature of 0°C to 10°C, preferably of 4°C to 10°C.

### Use of the composition

The product is typically to be used as a food product. It is typically used by oral administration. One can typically eat or drink the composition by processing it from a container to the mouth, optionally using a spoon, a glass, or a straw.

The product can be used for contributing to an acceleration of intestinal transit. The product can be typically used with a daily dosage of at least 10 g of wheat bran fiber, optionally in a form of 1 or 2 or 3 or 4 or 5 or 6 servings, said servings being preferably of from 100 g to 200 g, preferably of from 100 g to 150 g, preferably with at least 1.5 g of wheat bran fiber per 100 kcal, preferably at least 3 g per 100 kcal. Thus the dosage can be achieved by oral administration of several servings daily, for example 1 or 2 or 3 or 4 or 5 or 6 servings. The number of serving can depend on the amount of wheat bran or wheat bran fiber in the serving, and thus on the concentration of wheat bran or wheat bran fiber in the product. This amounts and/or concentrations can be adjusted as provided above.

Further details or advantages of the invention might appear in the following non limitative examples.

### Examples

### Example 1 - Wheat Bran powders

Various wheat bran powders are used and/or prepared and the particle size distribution is evaluated.
Powder A (comparative): wheat bran powder "ultrafine" grade supplied by Nutrixo.
Powder B: wheat bran powder "fine" grade supplied by Nutrixo, further sifted first with a 400 µm sift to recover lower sizes, and then with a 200 µm sift to recover higher sizes.
Powder C (comparative): wheat bran powder "fine" grade supplied by Nutrixo, further sifted first with a 500 µm sift to recover lower sizes, and then with a 200 µm sift to recover higher sizes.

The particle size distribution is evaluated with a Malvern Mastersizer 2000 laser particle size analyzer with a dry sampler Sirocco 2000. Conditions and parameters are the following: wheat bran powder samples, 3 bars suction flow, vibration 75%, refractive index 1494, 0.1 absorption, obscuration analysis between 1% and 2%.

The following data are reported:
- D_{M}: Volume-average diameter (of the sphere having the same volume)
- D₁₀: Diameter (of a sphere having the same volume) at which 10% by volume of the particles have a lower diameter and 90% by volume the particles have a higher diameter.
- D₅₀: Diameter (of a sphere having the same volume) at which 50% by volume of the particles have a lower diameter and 50% by volume the the particles have a higher diameter.
- D₉₀: Diameter (of a sphere having the same volume) at which 90% by volume of the particles have a lower diameter and 10% by volume the the particles have a a higher diameter.

The results are reported in table I below.

**Table I**

| **Powder** | **D_{M}** | **D₁₀** | **D₅₀** | **D₉₀** |
|---|---|---|---|---|
| A (Comparative) | 59.25 | 15.26 | 49.81 | 118.22 |
| B | 317.63 | 207.69 | 276.02 | 352.66 |
| C (Comparative) | 527.68 | 213.25 | 473.53 | 933.38 |

### Example 2 - Intermediate Fruit preparations (not according to the invention)

Intermediate fruit preparations are prepared by mixing Powders A, B or C of Example 1 in a fruit preparation.

The fruit preparation has the following composition (total 100 parts without wheat bran powder): Water (55.86 parts), Fruits cubes (16.67 parts), wheat bran flour (20 parts), Sweetener (6.5 parts), stabilizer (0.05 parts), Flavor (0.120 parts), Processing aids (0.8 parts).

The compositions of the intermediate fruit preparations are reported in table II below.

**Table II**

| Example | 2A (Comparative) | 2B | 2C (Comparative) |
|---|---|---|---|
| Fruit preparation | 80% | 80% | 80% |
| Powder A | 20% | | |
| Powder B | | 20% | |
| Powder C | | | 20% |

These fruit preparations are stable.

### Example 3 - Dairy fermented products

A white mass yogurt is prepared according to the recipe below:
- SKIM MILK POWDER (2.085%), Milk (86.600%), Cream (4.172%), Sugar (7.043%), Culture (0.1%).
- Hydration 30min. mini., Pre-heating 75°C, Heating 95°C, Holding 6.00 min., Homogenization 200 bars, Pre-cooling 40.00°C, Cooling 36.00°C, Fermentation 36°C, Breaking pH , Smoothing filter 0.5 mm, Cooling 20.00°C, Cold storage 10.00°C.

The white mass is then mixed with an amount of an intermediate fruit preparation of Example 2.

The following properties of the products are evaluated:
- Viscosity (mPa.s): measured 17 days after its preparation (referred to as D+17). The viscosity is measured by applying a regular shearing strength increase using a rheometer with 2 co-axial cylinders. The rheometer is a RM 200 from METTLER. With these tools, the Mobile n°1 is used together with the pot n°1. The 64 s⁻¹ shearing is applied during 10 seconds on the product at 10°C.
- Taste: Performed as a panel test of trained experts, at 10 days after preparation
- Stability/Whey: Visual evaluation of presence of whey, evaluated 35 days after the preparation.

The compositions and results are reported in tables III and IV below (the amounts of powders represent the amounts in the final product).

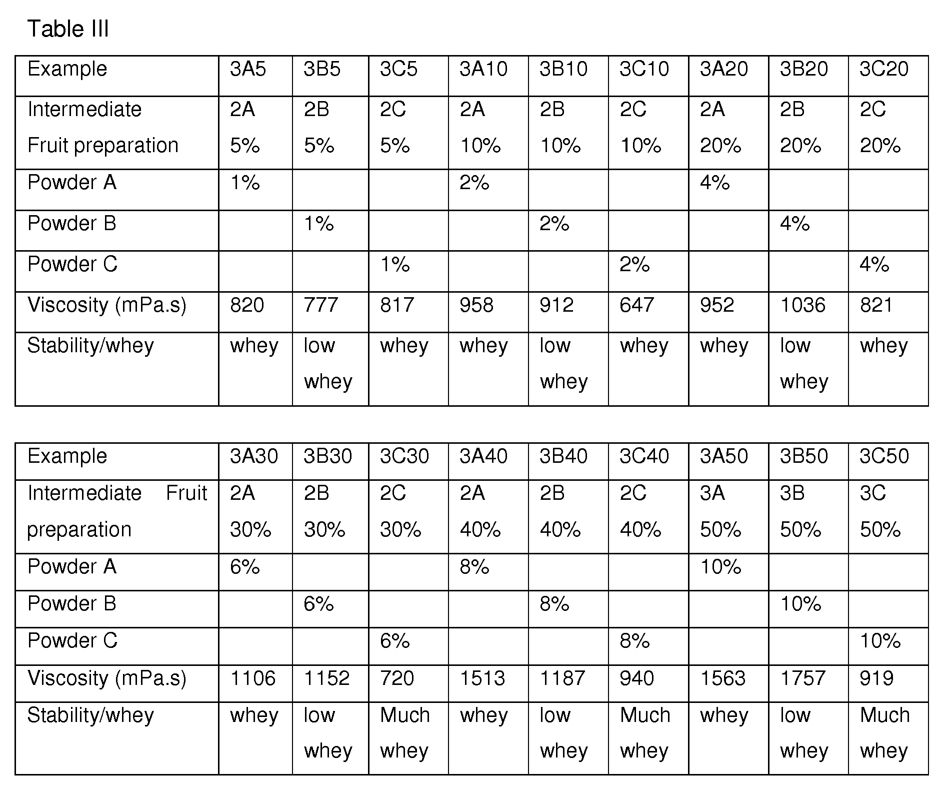

**Table IV**

| Example | 3A20 (comparative) | 3B20 | 3C20 (comparative) |
|---|---|---|---|
| White mass | 80% | 80% | 80% |
| Intermediate Fruit | 2A | 2B | 2C |
| Preparation | 20% | 20% | 20% |
| Amount wheat bran | 4% (powder A) | 4% (powder B) | 4% (powder C) |
| Amount of Wheat bran fiber | 1.8% | 1.8% | 1.8% |
| Energy (kcal per 125g) | 75 | 75 | 75 |
| Energy (kcal per 100 g) | 60 | 60 | 60 |
| Viscosity D+17 (mPa.s) | 952 | 1036 | 821 |
| Stability/whey | whey | low whey | whey |
| Taste | Bitter, astringent | Fresh, dairy notes, low bitterness | Bad particles perception in mouth, too spinning in the mouth, residual bitterness |

In a further stage the compositions are packaged and sealed in amounts of 125 g in yogurt cups.

## Claims

1. A dairy fermented product in a non-solid form comprising wheat bran dispersed therein, wherein:
- the product comprises at least 2.6 g of wheat bran, preferably at least 3.7 g, per 100 g of product, and
- the wheat bran has a particle size with a volume average diameter D_{M} of from 200 µm to 400 µm, preferably from 250 to 350 µm.

2. The product according claim 1, wherein the wheat bran has a particle size distribution as follows:
- Volume average diameter D_{M} of from 200 µm to 400 µm, preferably from 250 to 350 µm,
- D₁₀ of higher than 100 µm, preferably higher than 200 µm,
- D₅₀ of from 200 µm to 400 µm, preferably from 250 µm to 350 µm, and
- D₉₀ of lower than 600 µm, preferably lower than 400 µm.

3. The product according to any of the preceding claims, comprising at least 1.17 g, preferably at least 1.66 g, of wheat bran fiber, per 100 g of product.

4. A product according to any of the preceding claims, wherein the amount of wheat bran fiber is of at least 1.17 g per 100 kcal of product, preferably at least 1.66 g per 100 kcal.

5. A product according to any of the preceding claims, wherein said product is contained in a sealed container, in a serving amount of from 100 g to 200 g, preferably 100 g or 125 g or 150 g or 175 g.

6. A process of making a dairy fermented product in a non-solid form, comprising the step of dispersing wheat bran powder in a dairy fermented white mass or ingredients thereof, wherein:
- at least 2.6 g of wheat bran powder, preferably at least 3.7 g, per 100 g of product are dispersed, and
- the wheat bran powder has a particle size with a volume average diameter D_{M} of from 200 µm to 400 µm, preferably from 250 to 350 µm.

7. A process according to claim 6, comprising the steps of:
a) providing a dairy fermented white mass,
b) adding the wheat bran powder, preferably in an intermediate preparation comprising water, optionally taste modifiers, and the wheat bran dispersed therein.

8. A process according to claim 7, wherein the intermediate preparation is added in an amount by weight of from 5 parts to 50 parts, preferably from 10 parts to 30 parts, for 100 parts of product.

9. A process according to any claims 7 to 8, wherein the intermediate preparation comprises at least 10% by weight, preferably at least 15%, of wheat bran.

10. A process according to any of claims 6 to 9, wherein the wheat bran has a particle size distribution as follows:
- Volume average diameter D_{M} of from 200 µm to 400 µm, preferably from 250 to 350 µm,
- D₁₀ of higher than 100 µm, preferably higher than 200 µm,
- D₅₀ of from 200 µm to 400 µm, preferably from 250 µm to 350 µm, and
- D₉₀ of lower than 600 µm, preferably lower than 400 µm.

11. A process according to any of claims 6 to 10, wherein the amount of wheat bran dispersed is such that the product comprises an amount of wheat bran fiber of at least 1.17 g, preferably at least 1.66 g, per 100 g of product.

12. A process according to any of claims 6 to 11, wherein the amount of wheat bran dispersed is such that the product comprises an amount of wheat bran fiber of at least 1.17 g per 100 kcal of product, preferably at least 1.66 g per 100 kcal.

13. A process according to any claims 6 to 12, further comprising the step of conditioning the product in a container of from 100 g to 200 g, and preferably of sealing the container.

## Patentansprüche

1. Fermentiertes Molkereierzeugnis in einer nicht-festen Form, umfassend darin dispergierte Weizenkleie, wobei:
- das Erzeugnis zumindest 2,6 g Weizenkleie umfasst, vorzugsweise zumindest 3,7 g pro 100 g des Erzeugnisses, und
- die Weizenkleie eine Partikelgröße mit einem Volumen-gemittelten Durchmesser D_{M} von ab 200 µm bis 400 µm, vorzugsweise ab 250 bis 350 µm, aufweist.

2. Erzeugnis nach Anspruch 1, wobei die Weizenkleie eine Partikelgrößenverteilung aufweist wie folgt:
- Volumen-gemittelter Durchmesser D_{M} von ab 200 µm bis 400 µm, vorzugsweise ab 250 bis 350 µm,
- D₁₀ von höher als 100 µm, vorzugsweise höher als 200 µm,
- D₅₀ von ab 200 µm bis 400 µm, vorzugsweise ab 250 µm bis 350 µm, und
- D₉₀ von niedriger als 600 µm, vorzugsweise niedriger als 400 µm.

3. Erzeugnis nach einem der vorstehenden Ansprüche, umfassend zumindest 1,17 g, vorzugsweise zumindest 1,66 g Weizenkleie-Ballaststoffe pro 100 g des Erzeugnisses.

4. Erzeugnis nach einem der vorstehenden Ansprüche, wobei die Menge der Weizenkleie-Ballaststoffe aus zumindest 1,17 g pro 100 kcal des Erzeugnisses besteht, vorzugsweise zumindest 1,66 g pro 100 kcal.

5. Erzeugnis nach einem der vorstehenden Ansprüche, wobei das Erzeugnis in einem versiegelten Behälter in einer Serviermenge von ab 100 g bis 200 g, vorzugsweise 100 g oder 125 g oder 150 g oder 175 g enthalten ist.

6. Verfahren zum Erzeugen eines fermentierten Molkereierzeugnisses in einer nicht-festen Form, umfassend den Schritt des Dispergierens von Weizenkleiepulver in einer fermentierten weißen Molkereimasse oder Inhaltsstoffen davon, wobei:
- zumindest 2,6 g des Weizenkleiepulvers, vorzugsweise zumindest 3,7 g, pro 100 g des Erzeugnisses dispergiert sind, und
- das Weizenkleiepulver eine Partikelgröße mit einem Volumen-gemittelten Durchmesser D_{M} von ab 200 µm bis 400 µm, vorzugsweise ab 250 bis 350 µm, aufweist.

7. Verfahren nach Anspruch 6, umfassend die Schritte von:
a) Bereitstellen einer fermentierten weißen Molkereimasse,
b) Hinzufügen des Weizenkleiepulvers, vorzugsweise in einer Zwischenzubereitung umfassend Wasser, gegebenenfalls Geschmacksmodifikator, und die darin dispergierte Weizenkleie.

8. Verfahren nach Anspruch 7, wobei die Zwischenzubereitung in einer Menge pro Gewicht hinzugefügt wird von ab 5 Teilen bis 50 Teilen, vorzugsweise ab 10 Teilen bis 30 Teilen für 100 Teile des Erzeugnisses.

9. Verfahren nach einem der Ansprüche 7 bis 8, wobei die Zwischenzubereitung zumindest 10 Gewichts-%, vorzugsweise zumindest 15 %, der Weizenkleie umfasst.

10. Verfahren nach einem der Ansprüche 6 bis 9, wobei die Weizenkleie eine Partikelgrößenverteilung aufweist wie folgt:
- Volumen-gemittelter Durchmesser D_{M} von ab 200 µm bis 400 µm, vorzugsweise ab 250 bis 350 µm,
- D₁₀ von höher als 100 µm, vorzugsweise höher als 200 µm,
- D₅₀ von ab 200 µm bis 400 µm, vorzugsweise ab 250 µm bis 350 µm, und
- D₉₀ von niedriger als 600 µm, vorzugsweise niedriger als 400 µm.

11. Verfahren nach einem der Ansprüche 6 bis 10, wobei die Menge der dispergierten Weizenkleie so ist, dass das Erzeugnis eine Menge von Weizenkleie-Ballaststoff von zumindest 1,17 g, vorzugweise zumindest 1,66 g pro 100 g des Erzeugnisses umfasst.

12. Verfahren nach einem der Ansprüche 6 bis 11, wobei die Menge der dispergierten Weizenkleie so ist, dass das Erzeugnis eine Menge von Weizenkleie-Ballaststoff von zumindest 1,17 g pro 100 kcal des Erzeugnisses, vorzugsweise zumindest 1,66 g pro 100 kcal umfasst.

13. Verfahren nach einem der Ansprüche 6 bis 12, ferner umfassend den Schritt des Konditionierens des Erzeugnisses in einem Behälter aus ab 100 g bis 200 g, und vorzugsweise des Versiegelns des Behälters.

## Revendications

1. Produit laitier fermenté sous une forme non solide comprenant du son de blé dispersé dans celui-ci, dans lequel ;
- le produit comprend au moins 2,6 g de son de blé, de préférence au moins 3,7 g, pour 100 g de produit, et
- le son de blé a une taille de particules avec un diamètre moyen en volume D_{M} de 200 µm à 400 µm, de préférence de 250 à 350 µm.

2. Produit selon la revendication 1, dans lequel le son de blé a une distribution des tailles de particules suivante :
- Diamètre moyen en volume D_{M} de 200 µm à 400 µm, de préférence de 250 à 350 µm,
- D₁₀ supérieur à 100 µm, de préférence supérieur à 200 µm,
- D₅₀ de 200 µm à 400 µm, de préférence de 250 µm à 350 µm, et
- D₉₀ inférieur à 600 µm, de préférence inférieur à 400 µm.

3. Produit selon l'une quelconque des revendications précédentes, comprenant au moins 1,17 g, de préférence au moins 1,66 g, de fibre de son de blé, pour 100 g de produit.

4. Produit selon l'une quelconque des revendications précédentes, dans lequel la quantité de fibres de son de blé est d'au moins 1,17 g pour 100 kcal de produit, de préférence d'au moins 1,66 g pour 100 kcal.

5. Produit selon l'une quelconque des revendications précédentes, dans lequel ledit produit est contenu dans un récipient scellé, en une quantité de portion de 100 g à 200 g, de préférence de 100 g ou de 125 g ou de 150 g ou de 175 g.

6. Procédé de fabrication d'un produit laitier fermenté sous une forme non solide, comprenant l'étape de dispersion de poudre de son de blé dans une masse blanche laitière fermentée ou dans des ingrédients de celle-ci, dans lequel ;
- au moins 2,6 g de poudre de son de blé, de préférence au moins 3,7 g, pour 100 g de produit sont dispersés, et
- la poudre de son de blé a une taille de particules avec un diamètre moyen en volume D_{M} de 200 µm à 400 µm, de préférence de 250 à 350 µm.

7. Procédé selon la revendication 6, comprenant les étapes de :
a) fourniture d'une masse blanche laitière fermentée,
b) ajout de la poudre de son de blé, de préférence dans une préparation intermédiaire comprenant de l'eau, éventuellement des agents modifiant le goût, et le son de blé dispersé dans celle-ci.

8. Procédé selon la revendication 7, dans lequel la préparation intermédiaire est ajoutée en une quantité en poids de 5 parties à 50 parties, de préférence de 10 parties à 30 parties, pour 100 parties de produit.

9. Procédé selon l'une quelconque des revendications 7 à 8, dans lequel la préparation intermédiaire comprend au moins 10 % en poids, de préférence au moins 15 %, de son de blé.

10. Procédé selon l'une quelconque des revendications 6 à 9, dans lequel le son de blé a une distribution des tailles de particules suivante :
- Diamètre moyen en volume D_{M} de 200 µm à 400 µm, de préférence de 250 à 350 µm,
- D₁₀ supérieur à 100 µm, de préférence supérieur à 200 µm,
- D₅₀ de 200 µm à 400 µm, de préférence de 250 µm à 350 µm, et
- D₉₀ inférieur à 600 µm, de préférence inférieur à 400 µm.

11. Procédé selon l'une quelconque des revendications 6 à 10, dans lequel la quantité de son de blé dispersée est telle que le produit comprend une quantité de fibres de son de blé d'au moins 1,17 g, de préférence d'au moins 1,66 g, pour 100 g de produit.

12. Procédé selon l'une quelconque des revendications 6 à 11, dans lequel la quantité de son de blé dispersée est telle que le produit comprend une quantité de fibres de son de blé d'au moins 1,17 g pour 100 kcal de produit, de préférence d'au moins 1,66 g pour 100 kcal.

13. Procédé selon l'une quelconque des revendications 6 à 12, comprenant en outre l'étape de conditionnement du produit dans un récipient de 100 g à 200 g, et de préférence de scellage du récipient.
